# EUROPEAN PATENT SPECIFICATION

(11) **EP 3 601 395 B1**
(45) Date of publication and mention of the grant of the patent: **07.07.2021**
(21) Application number: 18710076.3
(22) Date of filing: 16.03.2018
(51) Int. Cl.: C08G 18/48, C08G 18/54, C08G 18/76, C08J 9/14, C08K 5/521

(54) **PROCESS FOR MAKING RIGID POLYURETHANE OR URETHANE-MODIFIED POLYISOCYANURATE FOAMS**
VERFAHREN ZUR HERSTELLUNG VON HARTEN POLYURETHAN- ODER URETHANMODIFIZIERTEN POLYISOCYANURATSCHÄUMEN
PROCÉDÉ DE PRODUCTION DE MOUSSES POLYISOCYANURATE RIGIDES MODIFIÉES PAR UN POLYURÉTHANE OU UN URÉTHANE

(30) Priority: 24.03.2017 EP 17162743
(43) Date of publication of application: 05.02.2020
(73) Proprietor: Huntsman International LLC, The Woodlands, TX 77380 (US)
(72) Inventor: BINAGHI, Luca, 21051 Arcisate (VA) (IT); DEDECKER, Kristof, 3061 Leefdaal (BE)
(74) Representative: Kourgias, Catherine
(86) International application number: PCT/EP2018/056732
(87) International publication number: WO 2018/172222

(56) References cited:
- WO-A1-2015/110404
- US-A1- 2009 306 238
- US-A1- 2012 009 407
- US-A1- 2013 059 934

## Description

This invention relates to processes for the preparation of rigid polyurethane or urethane-modified polyisocyanurate foams, to foams prepared thereby and to compositions useful in said processes.

Rigid polyurethane or urethane-modified polyisocyanurate foams are in general prepared by reacting a polyisocyanate with isocyanate-reactive compounds (usually a polyol) in the presence of a blowing agent, surfactants and catalysts.

Rigid polyurethane or urethane-modified polyisocyanurate foams are mainly used in construction for insulation, such as boards for walls and roofs, preinsulated pipes, spray foam for in-situ application, one-component froth (OCF) as sealants and as prefabricated composite panels. Whilst well-insulated buildings are environmentally better due to energy conservation, improving the fire properties of said foams is often required to meet fire safety legislation. The blowing agent in them also affects the fire performance, especially the use of the highly flammable hydrocarbons, such as n-, iso- and cyclo-pentane.

Various methods imparting fire retardancy to the polyurethane or urethane-modified polyisocyanurate foams have been developed.

Flame retardants (e.g. bromine and phosphorous flame retardants) are added to the foam formulation in order to achieve specific fire performance standards. Flame retardants can add significantly to system cost, some of them are environmentally questionable on the long term and they often have a negative effect on physical properties such as compressive strength. Further brominated flame retardants generate smoke which leads to a lower smoke category in a fire test such as SBI. For all of the above reasons, there is the need to reduce the amount of flame retardants, especially brominated flame retardants.
Especially for hydrocarbon blown polyurethane foams fairly high amounts of flame retardants are generally needed (up to 60 wt%).

WO 2015/110404 describes a process for making rigid polyurethane or urethane-modified polyisocyanurate foams from polyisocyanates and polyfunctional isocyanate-reactive compounds in the presence of blowing agents wherein the polyfunctional isocyanate-reactive compounds comprise a polyether polyol having a hydroxyl number of between 50 and 650 mg KOH/g obtained by reacting a polyfunctional initiator first with ethylene oxide and subsequently with propylene oxide wherein the propoxylation degree is between 0.33 and 2 mole propylene oxide per active hydrogen atom in the initiator and wherein the molar ratio of ethylene oxide to propylene oxide in said polyether polyol is at least 2.
By using such propylene oxide tipped ethoxylated polyether polyols foams are obtained with good foam properties, good processing characteristics and satisfactory fire properties using a minimum amount of flame retardant. Further these polyether polyols provide additional advantages over the use of polyester polyols which are frequently used as isocyanate-reactive compound in the preparation of rigid urethane-modified polyisocyanurate foams namely improved adhesion and a more consistent composition.

It is an object of the present invention to achieve very fast curing of the rigid polyurethane or urethane-modified polyisocyanurate foam while preserving good fire properties.

It is an object of the present invention to provide fire rated rigid polyurethane or urethane-modified polyisocyanurate insulation foam with good fire properties and good processing characteristics including fast curing.

According to the present invention the combined use of ethoxylated polyether polyols with a propylene oxide tip together with unmodified or modified novolac polyols has been identified as offering the best solution to the above identified problems.

Combined with PO-tipped ethoxylated polyethers the use of unmodified or modified novolac polyols leads to rigid polyurethane or urethane-modified polyisocyanurate foam with a unique combination of fire properties and low post expansion (fast cure), eventually with additional lower friability, compared to other traditional polyols of similar hydroxyl number used in rigid polyurethane or urethane-modified polyisocyanurate foam such as alkoxylated polyethers and polyesters.

US 2012/0009407 describes a rigid polyurethane foam with decreased flammability including the reaction product of a novolac polyol and an isocyanate.

US 2013/059934 describes a polyurethane foam and a resin composition including a first polyol based upon ethylene diamine and having about 100% ethylene oxide capping and a second polyol different from the first polyol. The second polyol most typically has ethylene oxide capping in an amount from about 20 to about 30%, and propylene oxide end-capping in an amount most typically from about 70 to about 80%. The resin composition may also include one or more flame retardants. In addition to halogen-substituted phosphates, the flame retardant may also include reactive hydroxyl groups. For example, the flame retardant can be a novolac polyol.

US 2009/306238 discloses a process for producing rigid polyurethane foams by reacting polyisocyanates with compounds having at least two hydrogen atoms which are reactive toward isocyanate groups in the presence of blowing agents, wherein the compounds having at least two hydrogen atoms comprise at least one polyether alcohol which can be prepared by reacting aromatic amines with ethylene oxide and propylene oxide, with firstly propylene oxide and subsequently ethylene oxide being added on in a first process step and propylene oxide being added on in a second process step.

CA 1046692 describes polyurethane-isocyanurates which can be employed in solid elastomeric products, surface coatings, cast or molded objects, or flexible, semi-flexible, semi-rigid or rigid foams produced from a novolac resin, a polyol, an organic polyisocyanate, and a catalyst for promoting the production of isocyanurate from isocyanate.

The present invention involves a method for making rigid polyurethane or urethane-modified polyisocyanurate foams from polyisocyanates and polyfunctional isocyanate-reactive compounds in the presence of blowing agents wherein the polyfunctional isocyanate-reactive compounds comprise an unmodified or modified novolac polyol and a polyether polyol having a hydroxyl number of between 50 and 650 mg KOH/g obtained by reacting a polyfunctional initiator first with ethylene oxide and subsequently with propylene oxide such that the propoxylation degree of said polyether polyol is between 0.33 and 2 mole propylene oxide per active hydrogen atom in the initiator and the molar ratio of ethylene oxide to propylene oxide in said polyether polyol is at least 2.

The unmodified novolac polyol for use in the present invention, also known in the art as "novolac resin" or "phenolic resin" , typically has a general chemical structure as follows: 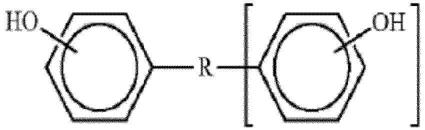 wherein R is an alkylene group and the novolac polyol has an average hydroxyl functionality of from 2 to 30 calculated by dividing the weight average molecular weight of the novolac polyol by the equivalent weight of the novolac polyol.

In one embodiment, the novolac polyol has a chemical structure as follows:

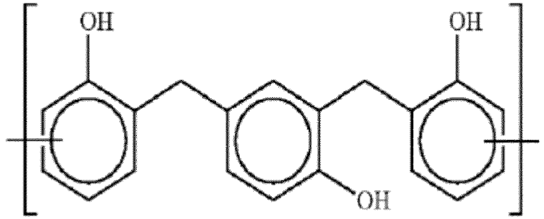

Each of the hydroxyl groups of the novolac polyol can be independently disposed in one or more of para-, ortho-, or meta-positions (most typically para- and ortho-) relative to R, e.g. relative to CH₂. Most typically, each of the hydroxyl groups is disposed in para- or ortho-position relative to R. In one embodiment, R is a -CH₂- group but is not limited in such a way and may be any alkylene or substituted alkylene group and may be linear, branched, or cyclic. In other embodiments, R is an alkylene group including at least one carbon-carbon double bond.

Although alkyl groups may be bonded directly to the benzyl rings typically, the novolac polyol is free of such alkyl groups as these groups may contribute to flammability. For example, the novolac polyol is typically free of t-butyl and t-amyl groups. Also, the novolac polyol is typically free of catechol groups, i.e. benzyl rings with two hydroxyl groups bonded to each of one or more benzyl rings.

In accordance with the aforementioned chemical structures, the novolac polyol is typically further defined as a reaction product of a phenolic compound and an aldehyde. Examples of suitable phenolic compounds include but are not limited to, phenol, o-cresol, m-cresol, p-cresol, bisphenol A, bisphenol F, bisphenol S, alkylphenols like p-tert. butylphenol, p-tert. amylphenol, p-isopropylphenol, p-tert. octylphenol, nonylphenol, dodecylphenol, p-cumylphenol, xylenols (dimethylphenols), ethylphenols, p-phenylphenol, alpha and beta naphthols, resorcinol, methylresorcinols, cashew nut shell liquid (CNSL) such as C15 alkylphenol, halogenated phenols like p-chlorophenol, o-bromophenol, etc., or combination of two or more thereof. Examples of suitable aldehydes include but are not limited to, formaldehyde, acetaldehyde, propionaldehyde, butyraldehyde, benzaldehyde, furfuryl aldehyde, glyoxal, etc., or combinations of two or more thereof. The preferred aldehyde is formaldehyde.

In one embodiment, the novolac polyol is further defined as the reaction product of bisphenol A and formaldehyde. In another embodiment, the novolac polyol is further defined as the reaction product of phenol, cresol, and formaldehyde. In still another embodiment, the novolac polyol is further defined as the reaction product of p-tert amylphenol and formaldehyde. In other embodiments, the novolac polyol is further defined as the reaction product of p-tert-butylphenol, phenol, and formaldehyde, or p-tert-butylphenol, bisphenol A, and formaldehyde. However, the novolac polyol is not limited to the aforementioned reaction products so long as the novolac polyol has the general chemical structure as described above.

As described above, the novolac polyol has an average hydroxyl functionality of from 2 to 30 calculating by dividing the weight average molecular weight of the novolac polyol by the equivalent weight of the novolac polyol. The average molecular weight is typically determined by gel permeation chromatography while the equivalent weight can be derived from a titrated hydroxyl number, as is appreciated in the art. In various embodiments, the average hydroxyl functionality is from 2 to 27, or from 2 to 25, or from 2 to 23, or from 2 to 20, or from 2 to 11, or from 2 to 10, or from 2 to 7, or from 2 to 6, or from 2 to 5, or from 2 to 4, or from 2 to 3 and is preferably about 3. Of course, it is to be understood that the instant invention is not limited to the aforementioned values and that the average hydroxyl functionality can be any whole or fractional amount or range of amounts within the aforementioned values. Without intending to be bound by any particular theory, it is believed that a low average hydroxyl functionality is related to a low melting point and low viscosity, which are beneficial to some embodiments of this invention.

In one embodiment, the novolac polyol may have a number average molecular weight from about 150 to about 5000 g/mol, from about 200 to about 4000 g/mol, from about 250 to about 3000 g/mol, from about 300 to about 2500 g/mol, even from about 300 to about 2000 g/mol. In one embodiment the novolac polyol may have a number average molecular weight from about 200 to about 1000 g/mol.

In various embodiments, the novolac polyol has one or more of the following approximate physical properties. However, it is to be understood that the novolac polyol is not limited to these approximate physical properties and may have additional physical properties not listed below and/or have physical properties that differ from those below.

| Specific Gravity | Viscos. (cps at 150° C.) | M*ₙ* (g/mol) | M*_{w}* (g/mol) | Softening Point, °C. | Equiv. Wt | OH Funct. (M*ₙ*/ Equiv Wt) | OH Funct. (M*_{w}*/ Equiv Wt) |
|---|---|---|---|---|---|---|---|
| 1.26 | - | 296-300 | 450 | 60 | 102 | 2.9 | 4.4 |
| 1.24 | - | - | - | - | - | - | - |
| - | 200-600 | 330 | 570 | 65-67 | 104 | 3.2 | 5.5 |
| - | 145-170 | 440 | 810 | 70-72 | 105 | 4.2 | 7.8 |
| 1.27 | 240-440 | 500 | 1230 | 82-84 | 105 | 4.8 | 11.7 |
| - | 1400-2400 | 600 | 2500 | 95-98 | 106 | 5.7 | 23.7 |
| - | 1200-3000 | 675 | 2900 | - | 106 | 6.3 | 27.4 |
| - | 2200-400 | 675 | 2900 | 108-110 | 106 | 6.3 | 27.4 |
| 1.19 | 800-1200 | 580 | 890 | 50-62 | 116 | 5 | 7.7 |
| - | - | - | - | 82-99 | - | - | - |
| 1.06 | - | - | - | 88-99 | 179 | - | - |
| 1.28 | 1 000-1700 | 970 | 2400 | 94-102 | 104 | 9.3 | 23.1 |
| 1.28 | 1200-2000 | 820 | 2630 | 98-104 | 104 | 7.9 | 25.6 |
| 1.08 | - | - | - | 102-118 | 159 | - | - |
| 1.09 | - | - | - | 104-116 | 180 | - | - |
| 1.29 | - | - | - | 110-116 | 106 | - | - |
| 1.10 | - | - | - | 143-157 | 155 | - | - |

The unmodified novolac polyol described above can be modified by alkylating the phenolic hydroxyl groups with an alkylene oxide or alkylene carbonate and represent then the modified novolac polyol for use according to the invention. Examples of suitable alkylene oxides include, but are not limited to, ethylene oxide, propylene oxide, butylene oxide, cyclohexane oxide, etc., or combinations of two or more thereof. Examples of suitable alkylene carbonates include ethylene carbonate, propylene carbonate, butylene carbonate, etc., or combinations of two or more thereof. Also, the phenolic resin may be modified with a combination of alkylene oxides and alkylene carbonates. The phenolic resin may be modified to a minimum degree. In one embodiment, the phenolic resin is at least 30% oxyalkylated; at least 40% oxyalkylated; at least 50% oxyalkylated; at least 60% oxyalkylated; at least 75% oxyalkylated; at least 85% oxyalkylated; even at least 90% oxyalkylated. That is, in one embodiment, the modified novolac polyol comprises about 70% or less, about 60% or less, about 50% or less, about 40% or less, about 25% or less, about 15% or less, or even about 10% or less of free phenolic hydroxyl groups present in the original unmodified phenolic resin. In one embodiment, the modified novolac polyol comprises about 0% to about 70% of free phenolic hydroxyl groups present in the original phenolic resin; about 5% to about 60% free phenolic hydroxyl groups present in the original phenolic resin; about 10% to about 50% free phenolic hydroxyl groups present in the original phenolic resin; about 15% to about 45% free phenolic hydroxyl groups present in the original phenolic resin; even about 20% to about 40% free phenolic hydroxyl groups present in the original phenolic resin. As used herein, the percentage of free hydroxyl groups of the modified phenolic resin and the percentage of modification (e.g., the percentage to which the resin is oxyalkylated) is expressed in terms of molar or mol percent of the resin.

The phenolic resin can be modified to provide primary hydroxyl groups, secondary hydroxyl groups, or a combination of primary and secondary hydroxyl groups. In one embodiment, the phenolic resin is modified to provide a phenolic resin where at least 50%; at least 60%; even at least 75% of the phenolic hydroxyl groups that have been modified are primary alcohols. In one embodiment, the phenolic resin is modified to provide a phenolic resin where at least 50% to at least 100%, at least 60% to at least 95%, even at least 75% to at least 90% of the phenolic hydroxyl groups have been modified to provide a primary alcohol. Modified novolac polyols with terminal primary hydroxyl groups may be provided in one aspect by modifying the phenol group with ethylene oxide, ethylene carbonate, or a combination thereof. In one embodiment, the novolac polyol is modified to provide hydroxyl terminated resin with at least one secondary hydroxyl group.

The modified phenolic resin are provided such that the phenolic hydroxyl group has been modified with the alkylene oxide, alkylene carbonate, or both. The modified phenolic resin may be prepared by either first oxyalkylating a phenolic compound with an alkylene oxide, alkylene carbonate, or both, and then reacting the modified phenol with an aldehyde. Alternatively, the modified phenolic resin may be prepared by oxyalkylating the phenolic hydroxyl groups of an already formed novolac resin.

The alkylene carbonate or alkylene oxide reacts with the novolac to form a chemically modified-novolac polyol. The modified novolac polyol may be 100% alkyoxylated or comprise some phenolic hydroxyl groups. In some embodiments, the modified novolac polyol may be represented by a compound of the formula: 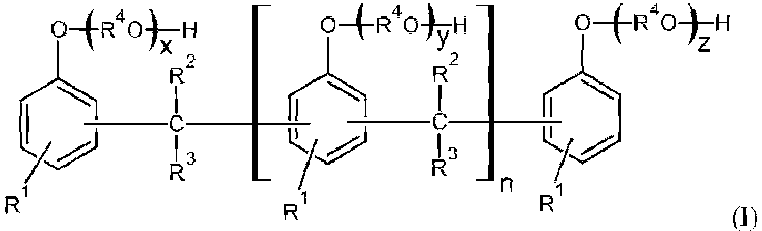 wherein n has an average value of about 0.2 to 6; x, y and z have values from 0 to 25 where x + y + z is greater than 0; R¹ is independently selected from the group consisting of hydrogen or an alkyl group or a mixture thereof; R² and R³ are independently selected from the group consisting of hydroxyl and an alkyl group; and R⁴ is independently chosen from an alkyl group. In some embodiments, n may be about 0.5 to about 4; x, y and z are independently 1 to 10. The alkyl group R² and R³ may be chosen from hydrogen or from a C1-C10 alkyl group. The C1-C10 alkyl groups may be linear or branched. The alkyl group R⁴ may be chosen from a C1-C10 alkyl group or mixture thereof, and in some embodiments from a C2-C4 alkyl group of mixture thereof. In some embodiments, the R⁴ alkyl group is such that the alkyoxylated resin comprises primary hydroxyl groups. In other embodiments, the R⁴ alkyl group may be such that the modified resin comprises secondary hydroxyl groups.

When a portion of the phenolic resin is not modified, x, y and/or z will be equal to 0 or can have a fractional value below 1. It will be appreciated that where the modified phenolic resin is less than 100% alkyoxylated, the formula may further comprise unmodified phenolic resin group: 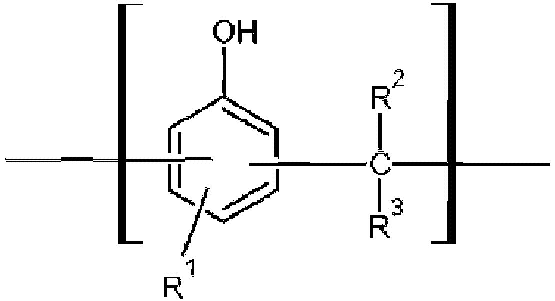 where R¹, R² and R³ may be as described above.

In the process according to the present invention unmodified novolac polyol or modified novolac polyol may be used but preference goes to the use of unmodified novolac polyol. Also mixtures of unmodified and modified novolac polyol may be used.

The unmodified or modified novolac polyol is present in an amount of from 1 to 65 parts by weight per 100 pbw of polyfunctional isocyanate-reactive compounds. In one embodiment, the novolac polyol is present in an amount of from 3 to 40 parts by weight per 100 pbw of polyfunctional isocyanate-reactive compounds. In another embodiment, the novolac polyol is present in an amount of from 5 to 20 parts by weight per 100 pbw of polyfunctional isocyanate-reactive compounds. Without intending to be bound by any particular theory, it is believed that it would be difficult to incorporate the novolac polyol in the isocyanate-reactive composition in amounts of greater than 65 parts by weight due to the viscosity. Of course, it is to be understood that the instant invention is not limited to the aforementioned values and that the novolac polyol can be present in any whole or fractional amount or range or amounts within the aforementioned values.

In one embodiment, the novolac polyol is a solid at room temperature. In this embodiment, the novolac polyol is heated to a temperature at or above its softening point to facilitate incorporation into a non-reactive diluent or solvent or other polyol to form a pourable mixture. It is contemplated that the novolac polyol may be added as a heated liquid into the non-reactive diluent or solvent or other polyol at approximately the same temperature. Alternatively, the novolac polyol may be added directly into the isocyanate-reactive composition which itself may be heated. The novolac polyol may be entirely dissolved into the isocyanate-reactive composition such that there are no visible particles of the novolac polyol in the isocyanate-reactive composition. Alternatively, the novolac polyol may be partially dissolved in the isocyanate-reactive composition such that particles of the novolac polyol are suspended in the isocyanate-reactive composition. The novolac polyol may be dissolved in the isocyanate-reactive composition at elevated temperatures, e.g. temperatures above room temperature, but may be non-dissolved (or insoluble) in the isocyanate-reactive composition at lower temperatures (e.g. room temperature and below). Most typically, the novolac polyol is dissolved in the non-reactive diluent or solvent or other polyol that is described in greater detail below. The non-reactive diluent or solvent may be any known in the art including, but not limited to, organic solvents, triethylphosphate, trischloroisopropylphosphate, dimethylpropanephosphonate, and the like. In one embodiment, the non-reactive diluent or solvent is selected from the group of ethylene glycol, diethylene glycol, dipropylene glycol, propylene carbonate, glycerine, and combinations thereof. Non-reactive diluents or solvents such as triethylphosphate, trischloroisopropylphosphate, and dimethylpropanephosphonate may also function as flame retardants. Alternatively, the novolac polyol may be entirely dissolved in the isocyanate-reactive composition at room temperature and below or at temperatures above room temperature. In one embodiment, the solvent includes triethylphosphate and the novolac polyol is dissolved in the triethylphosphate at temperatures at or above about 60°C.

The PO-tipped ethoxylated polyether polyols for use in the present invention are generally obtained by a two-step process: in a first step reacting the polyfunctional initiator with ethylene oxide and in a subsequent step with propylene oxide. In the first step preferably pure ethylene oxide is used but also mixtures of ethylene oxide and a small amount (in general less than 20 wt%, preferably less than 10 wt% of total alkylene oxide used in said first reaction step) of another alkylene oxide such as propylene oxide and/or butylene oxide can be used. In the subsequent step preferably solely propylene oxide is used but equally mixtures of propylene oxide containing a small amount (in general less than 20 wt%, preferably less than 10 wt% of total alkylene oxide used in said second reaction step) of another alkylene oxide such as ethylene oxide and/or butylene oxide can be used.

Alternatively said polyether polyols can also be obtained by reacting the polyfunctional initiator in one step with a mixture of ethylene oxide and propylene oxide. Since ethylene oxide is more reactive than propylene oxide, the ethylene oxide groups will react first with the initiator and once all the ethylene oxide is consumed propylene oxide will react with the ethoxylated initiator.

The propoxylation degree of said propylene oxide tipped ethoxylated polyether polyol is an important feature of the present invention: if it's too high the fire properties will deteriorate, if it's too low the reactivity is not sufficiently altered.

The propoxylation degree is between 0.33 and 2 mole propylene oxide per active hydrogen atom, preferably between 0.66 and 1 mole propylene oxide per active hydrogen atom in the initiator.

The amount of ethylene oxide in said propylene oxide tipped ethoxylated polyether polyol is preferably from 2 to 15 mole of ethylene oxide per active hydrogen atom, more preferably from 2.5 to 8.5 mole per active hydrogen in the initiator.

The molar ratio of ethylene oxide to propylene oxide in the propylene oxide tipped ethoxylated polyether polyol is preferably between 2 and 10, more preferably between 2.5 and 8.5.

In general, the amount of propylene oxide is between 15 and 40 wt% and the amount of ethylene oxide between 60 and 85 wt% based on total alkylene oxide in the polyether polyol for use according to the invention. But there may be embodiments according to the invention outside of these ranges.

The amount of ethylene oxide based on the total polyether polyol for use in the present invention is generally between 60 and 97 wt%, preferably between 65 and 90 wt% and the amount of propylene oxide generally between 3 and 40 wt% and preferably between 10 and 35 wt% based on said total polyether polyol.

Any initiator containing from 2 to 8, preferably 3 to 5 active hydrogen atoms per molecule known in the art can be used to obtain the propylene oxide tipped ethoxylated polyether polyol for use in the present invention. Suitable initiators include: polyols, for example glycerol, trimethylolpropane, triethanolamine, tris(2-hydroxyethyl)isocyanurate, pentaerythritol, sorbitol and sucrose; polyamines, for example ethylene diamine, tolylene diamine (TDA), diaminodiphenylmethane (DADPM) and polymethylene polyphenylene polyamines; and aminoalcohols, for example ethanolamine and diethanolamine; and mixtures of such initiators. A particularly prepared initiator is glycerol or DADPM.

The propylene oxide tipped ethoxylated polyether polyols for use in the present invention have average hydroxyl numbers of from 50 to 650 mg KOH/g, preferably 100 to 650 mg KOH/g, especially from 120 to 350 mg KOH/g, most preferably between 150 and 300 mg KOH/g. Other preferred ranges for the hydroxyl number are: 50 to 400 mg KOH/g, 75 to 350 mg KOH/g, 100 to 300 mg KOH/g, 150 to 290 mg KOH/g, 160 to 250 mg KOH/g.

A particularly preferred propylene oxide tipped ethoxylated polyether polyols for use in the present invention is a glycerol initiated polyether polyol of hydroxyl value 100 to 300 mg KOH/g having a propoxylation degree of 0.66 to 1 mole of propylene oxide per active hydrogen atom and an ethylene oxide/propylene oxide molar ratio of between 5 and 8.

Another preferred propylene oxide tipped ethoxylated polyether polyol for use in the present invention is a DADPM initiated polyether polyol of hydroxyl value 100 to 300 mg KOH/g having a propoxylation degree of 0.66 to 2 mole of propylene oxide per active hydrogen atom and an ethylene oxide/propylene oxide molar ratio of between 5 and 8.

The propylene oxide tipped ethoxylated polyether polyol for use in the present invention is preferably prepared by first adding ethylene oxide onto the initiator, preferably in an amount of 2 to 15, more preferably 2 to 10 or even 2.5 to 8.5 mole per active hydrogen. After the addition reaction of the ethylene oxide, propylene oxide is added in an amount of 0.33 to 2 mole per active hydrogen, preferably 0.66 to 1 mole per active hydrogen.

In the process of the present invention only one of said propylene oxide tipped ethoxylated polyether polyols can be used or a mixture of two or more of such polyols.

The isocyanate-reactive composition may also include, and preferably does include, a third polyol that is different from the novolac polyol and from the propylene oxide tipped ethoxylated polyether polyol.

Other isocyanate-reactive compounds to be used in the process of the present invention in addition to novolac polyol and the propylene oxide tipped ethoxylated polyether polyol include any of those known in the art for the preparation of rigid polyurethane or urethane-modified polyisocyanurate foams. Of particular importance are polyols and polyol mixtures having average hydroxyl numbers of from 160 to 1000, especially from 200 to 800 mg KOH/g, and hydroxyl functionalities of from 2 to 8, especially from 2 to 6. Suitable polyols have been fully described in the prior art and include reaction products of alkylene oxides, for example ethylene oxide and/or propylene oxide, with initiators containing from 2 to 8 active hydrogen atoms per molecule. Suitable initiators include: polyols, for example glycerol, trimethylolpropane, triethanolamine, pentaerythritol, sorbitol and sucrose; polyamines, for example ethylene diamine, tolylene diamine (TDA), diaminodiphenylmethane (DADPM) and polymethylene polyphenylene polyamines; and aminoalcohols, for example ethanolamine and diethanolamine; and mixtures of such initiators. Other suitable polymeric polyols include polyesters obtained by the condensation of appropriate proportions of glycols and higher functionality polyols with dicarboxylic or polycarboxylic acids, DMT-scrap or digestion of PET by glycols. Still further suitable polymeric polyols include hydroxyl-terminated polythioethers, polyamides, polyesteramides, polycarbonates, polyacetals, polyolefins and polysiloxanes.

Preferred isocyanate-reactive compounds to be used in the present invention in addition to the propylene oxide tipped ethoxylated polyether polyol and the novolac polyol are propoxylated polyethers with a functionality above 5 and an hydroxyl value above 400 mg KOH/g (preferably in an amount of between 10 and 50 pbw based on total isocyanate-reactive compounds) and aromatic polyester polyols with an hydroxyl value below 350 mg KOH/g (preferably in an amount of between 10 and 50 pbw based on total isocyanate-reactive compounds).

Compounds having at least two hydrogen atoms which are reactive towards isocyanate groups also include any low molecular weight (below 400) chain extenders and cross linkers which may be concomitantly used. The addition of bifunctional chain extenders, trifunctional and higher-functional cross linkers or, if appropriate, mixtures thereof can prove to be advantageous for modifying the mechanical properties. As chain extenders and/or cross linkers, preference is given to alkanolamines and in particular diols and/or triols having molecular weights of less than 400, preferably from 60 to 300.
Examples of such compounds include water, triethanolamine, ethylene glycol, diethylene glycol, trimethylolpropane, formitol mixtures and glycerol.
Preferably said compounds are used in amounts varying between 0 and 10 pbw based on total isocyanate-reactive compounds.

In general, the total polyfunctional isocyanate-reactive component for use in rigid polyurethane foam according to the present invention will have an hydroxyl value between 300 and 550 mg KOH/g and an average functionality between 2.5 and 5.0. In the case of rigid urethane-modified polyisocyanurate foams the polyfunctional isocyanate-reactive component generally has an hydroxyl value between 150 and 350 mg KOH/g and an average functionality between 2 and 3.5.

For use in rigid polyurethane foams said propylene oxide tipped ethoxylated polyether polyol is preferably present in an amount of between 5 and 50 pbw, more preferably between 5 and 35 pbw or even between 10 and 30 pbw or between 15 and 25 pbw of total polyfunctional isocyanate-reactive compounds present in the foam formulation.

When used in rigid urethane-modified polyisocyanurate foam the amount of said propylene oxide tipped ethoxylated polyether polyol is preferably between 5 and 80 pbw and most preferably between 10 and 70 pbw based on total polyfunctional isocyanate-reactive compounds present in the foam formulation.

Suitable organic polyisocyanates for use in the process of the present invention include any of those known in the art for the preparation of rigid polyurethane or urethane-modified polyisocyanurate foams, and in particular the aromatic polyisocyanates such as diphenylmethane diisocyanate in the form of its 2,4'-, 2,2'- and 4,4'-isomers and mixtures thereof, the mixtures of diphenylmethane diisocyanates (MDI) and oligomers thereof known in the art as "crude" or polymeric MDI (polymethylene polyphenylene polyisocyanates) having an isocyanate functionality of greater than 2, toluene diisocyanate in the form of its 2,4- and 2,6-isomers and mixtures thereof, 1,5-naphthalene diisocyanate and 1,4-diisocyanatobenzene. Other organic polyisocyanates, which may be mentioned, include the aliphatic diisocyanates such as isophorone diisocyanate, 1,6-diisocyanatohexane and 4,4'-diisocyanatodicyclohexylmethane.

The process according to the present invention is generally carried out at an isocyanate index of up to 1000%. The term isocyanate index as used herein is meant to be the molar ratio of NCO-groups over reactive hydrogen atoms present in the foam formulation, given as a percentage.

In order to obtain rigid polyurethane foam the reaction between the polyisocyanate and polyfunctional isocyanate-reactive component is typically carried out at an isocyanate index of up to 180 %, most preferably at an isocyanate index of from 100 to 160 %. For urethane-modified polyisocyanurate foams said index is higher, preferably between 180 and 1000 %, more preferably between 200 and 500 % and most preferably between 350 and 500 %.

Any of the physical blowing agents known for the production of rigid polyurethane or urethane-modified polyisocyanurate foam can be used in the process of the present invention. Examples of these include dialkyl ethers, cycloalkylene ethers and ketones, fluorinated ethers, chlorofluorocarbons, perfluorinated hydrocarbons, hydrochlorofluorocarbons, hydrofluorocarbons, hydrochlorofluoroolefins, hydrofluoroolefins and, in particular, hydrocarbons.

Examples of suitable hydrochlorofluorocarbons include 1-chloro-1,2-difluoroethane, 1-chloro-2,2-difluoroethane, 1-chloro-1,1-difluoroethane, 1,1-dichloro-1-fluoroethane and monochlorodifluoromethane.

Examples of suitable hydrofluorocarbons include 1,1,1,2-tetrafluoroethane (HFC 134a), 1,1,2,2-tetrafluoroethane, trifluoromethane, heptafluoropropane, 1,1,1-trifluoroethane, 1,1,2-trifluoroethane, 1,1,1,2,2-pentafluoropropane, 1,1,1,3-tetrafluoropropane, 1,1,1,3,3-pentafluoropropane (HFC 245fa), 1,1,3,3,3-pentafluoropropane, 1,1,1,3,3-pentafluoro-n-butane (HFC 365mfc), 1,1,1,4,4,4-hexafluoro-n-butane, 1,1,1,2,3,3,3-heptafluoropropane (HFC 227ea) and mixtures of any of the above.

Examples of suitable hydro(chloro)fluoroolefins are trans-1-chloro-3,3,3-fluoropropene (HCFO 1233zd), trans-1,3,3,3-tetrafluoropropene (HFO 1234ze) and 1,1,1,4,4,4-hexafluoro-2-butene (HFO 1336mzz).

Suitable hydrocarbon blowing agents include lower aliphatic or cyclic, linear or branched hydrocarbons such as alkanes, alkenes and cycloalkanes, preferably having from 4 to 8 carbon atoms. Specific examples include n-butane, iso-butane, 2,3-dimethylbutane, cyclobutane, n-pentane, iso-pentane, technical grade pentane mixtures, cyclopentane, methylcyclopentane, neopentane, n-hexane, iso-hexane, n-heptane, iso-heptane, cyclohexane, methylcyclohexane, 1-pentene, 2-methylbutene, 3-methylbutene, 1-hexene and any mixture of the above. Preferred hydrocarbons are n-butane, iso-butane, cyclopentane, n-pentane and isopentane and any mixture thereof.

Other suitable blowing agents are tertiary butanol (2-methyl-2-propanol), formic acid, dimethoxymethane and methyl formiate.

Generally water or other carbon dioxide-evolving compounds are used together with the physical blowing agents. Where water is used as chemical co-blowing agent typical amounts are in the range from 0.1 to 5 %, preferably from 0.2 to 3 % by weight based on the isocyanate-reactive component.

The total quantity of blowing agent to be used in a reaction system for producing cellular polymeric materials will be readily determined by those skilled in the art, but will typically be from 2 to 40 % by weight based on the total polyfunctional isocyanate-reactive components.

Preferred blowing agents are hydrocarbons, hydrofluorocarbons, hydro(chloro)fluoroolefins and any mixture thereof.

The reaction is generally carried out in the presence of a catalyst that catalyses the reaction of isocyanates with water and other isocyanate-reactive compounds such as tertiary amines, organometallic compounds (primarily tin compounds) and carboxylic acid salts.

Examples of suitable urethane catalysts for use in the present invention include dimethylcyclohexylamine, triethylamine, pentamethylenediethylenetriamine, tris (dimethylamino-propyl) hexahydrotriazine (commercially available as Jeffcat TR 90 from Huntsman Performance Chemicals), dimethylbenzylamine (commercially available as Jeffcat BDMA from Huntsman Performance Chemicals), 2,2-dimorpholinodiethylether, bis-(2-dimethylaminoethyl)-ether (commercially available as Niax A1 or Jeffcat ZF20 from Huntsman Performance Chemicals), 1,4-diazobicyclo[2.2.2]octane, N-[2-(dimethylamino)ethyl]-N-methylethanolamine (commercially available as Jeffcat Z110 from Huntsman Performance Chemicals), dimethylethanolamine, 2-(2-dimethylamino-ethoxy)-ethanol (commercially available as Jeffcat ZF10 from Huntsman Performance Chemicals), 1-(bis(3-(dimethylamino)propyl)amino)-2-propanol (commercially available as Jeffcat ZR50 from Huntsman Performance Chemicals), stannous octoate, dibutyltindilaurate, potassium acetate, potassium octoate and any mixture thereof.

The above catalysts are generally used in amounts ranging from 0.5 to 8 % by weight based on the isocyanate-reactive component.

When rigid urethane-modified polyisocyanurate foam is to be produced additionally a catalyst is present that catalyses the isocyanate trimerisation reaction. Examples include tertiary amines, triazines and most preferably metal salt catalysts such as alkali metal salts of organic carboxylic acids.

These trimerisation catalysts are generally used in amounts ranging from 0.5 to 5 % by weight based on the isocyanate-reactive component.

In addition to the polyisocyanate and polyfunctional isocyanate-reactive compositions and the blowing agents and catalysts, the foam-forming reaction mixture will commonly contain one or more other auxiliaries or additives conventional to formulations for the production of rigid polyurethane or urethane-modified polyisocyanurate foams. Such optional additives include fire retardants, for example phosphorous containing products, surfactants preferably silicone-based surfactants, nucleating agents to provide fine cells (e.g. fluoroalkenes such as FA-188 commercially available from 3M) and fillers such as carbon black.

While the basic foam formulation of the present invention enables preparation of foams having improved fire properties, in some embodiments it may be desirable to further enhance fire performance by including, as additives, one or more brominated or preferably non-brominated flame retardants such as red phosphorus, ammonium polyphosphate, tris(2-chloroethyl)phosphate, tris(2-chloropropyl) phosphate, tetrakis(2-chloroethyl)ethylene diphosphate, dimethyl methane phosphonate, triethyl phosphate, dimethyl-propyl phosphonate, diethyl diethanolaminomethylphoshonate, tricresyl phosphate, diethyl-ethyl phosphonate, aluminum oxide hydrate, antimony trioxide, arsenic oxide, calcium sulfate, molybdenum trioxide, ammonium molybdate, expandable graphite, cyanuric acid derivatives, melamine, chlorinated paraffins, and any mixture thereof.

When flame retardants are used in the process of the present invention, they are generally added in amounts varying between 10 and 60 pbw, preferably between 15 and 30 pbw based on the isocyanate-reactive component.

Surfactants, including organic surfactants and silicone based surfactants, may be added to serve as cell stabilizers. Some representative materials are sold under the designations Niax L6100, L6900 , L6917, L6887 supplied by Momentive Performance Chemicals, Dabco DC 193 supplied by Air Products, Tegostab B8534, B8461, B8490, B8476, B8460, B8486, B8466, B8484, B8470, B8487 supplied by Evonik. Typically, from about 0.5 to 5 pbw of surfactant based on isocyanate-reactive component is used.

The polyurethanes prepared according to the process of this invention are generally rigid, foamed, closed-celled polymers, usually having an open cell content of less than 20 %.

The density of the foams produced by the process of the invention is preferably in the range 25 to 50 g/l.

Such a foamed polymer is typically prepared by intimately mixing the reaction components, i.e., a polyol/blowing agent component (consisting essentially of the isocyanate-reactive components and blowing agent(s)), along with an isocyanate component, i.e. at least two streams; or a polyol component (consisting essentially of the isocyanate-reactive compounds), a blowing agent component and an isocyanate component, i.e., at least three streams, wherein the formulated polyol and blowing agent component mix just prior to contact thereof with the isocyanate component, at room temperature or at a slightly elevated temperature for a short period. Additional streams may be included, as desired, for the introduction of various catalysts and other additives. Mixing of streams may be carried out either in a spray apparatus, a mixhead with or without a static mixer for combining the polyol component and blowing agent, or a vessel, and then spraying or otherwise depositing the reacting mixture onto a substrate. This substrate may be, for example, a rigid or flexible facing sheet made of foil or another material, including another layer of similar or dissimilar polyurethane which is being conveyed, continuously or discontinuously, along a production line, or directly onto a conveyor belt.

In alternative embodiments the reacting mixture may be poured into an open mold or distributed via laydown equipment into an open mould or simply deposited at or into a location for which it is desired, i.e., a pour-in-place application, such as between the interior and exterior walls of a structure. In the case of deposition on a facing sheet, a second sheet may be applied on top of the deposited mixture. In other embodiments, the mixture may be injected into a closed mold, with or without vacuum assistance for cavity-filling. If a mold is employed, it is most typically heated.

In general, such applications may be accomplished using the known one-shot, prepolymer or semi-prepolymer techniques used together with conventional mixing methods. The mixture, on reacting, takes the shape of the mold or adheres to the substrate to produce a polyurethane polymer or a more-or-less predefined structure, which is then allowed to cure in place or in the mold, either partially or fully. Optimum cure conditions will depend upon the particular components, including catalysts and quantities used in preparing the polymer and also the size and shape of the article manufactured.

The result may be a rigid foam in the form of slabstock, a molding, a filled cavity, including but not limited to a pipe or insulated wall or hull structure, a sprayed foam, a frothed foam, or a continuously- or discontinuously-manufactured laminate product, including but not limited to a laminate or laminated product formed with other materials such as hardboard, plasterboard, plastics, paper, metal, or a combination thereof.

The polyurethane or urethane-modified polyisocyanurate foams produced according to the present invention are fast-curing and exhibit improved fire properties.

As used herein, in general the term "improved fire behavior" refers to the capability of the foam to exhibit B2 fire behavior, which is defined as having a flame height of not higher than 15 cm when tested according to German Standard DIN 4102.

According to DIN 4102, combustible building materials are categorized into B1: schwerentflammbar, B2: normal entflammbar, or B3: leichtentflammbar, using both a small burner test and a large chimney test procedure.

The small burner test consists of a vertically oriented specimen which is exposed on either edge or side to a specified ignition flame for 15 seconds. To obtain a B2 classification, the flame front may not have reached a previously marked line at 150 mm within a 20 second time interval inclusive of the 15 second flame exposure time.

The rigid foams obtainable in accordance with the invention are useful for applications requiring increased flame resistance for polyurethane or urethane-modified polyisocyanurate foams, such as in the building industry. They are also useful as insulation in the automotive field (trucks and automobiles), as coating materials having increased flame resistance and as noise insulator for engine bonnets.

The various aspects of this invention are illustrated, but not limited by the following examples.

In these examples the following ingredients are used:
- Novolac 1: Durez® 32303 commercially available from Sumitomo Bakelite (OH value 510 mg KOH/g) (unmodified novolac polyol)
- Novolac 2: Bakelite® PF 8505F commercially available from Hexion (OH value 530 mg KOH/g) (unmodified novolac polyol)
- Novolac 3: An unmodified novolac polyol of OH value 560 mg KOH/g
- Novolac 4: An unmodified novolac polyol of OH value 568 mg KOH/g
- Novolac 5: Niax® FRP 270/30 commercially available from Momentive (OH value 270, 30% TEP)
- Polyether A: An ethoxylated polyether polyol with propylene oxide tip based on glycerol as initiator. A propylene oxide tip (1.0 mole PO / active H) has been added to the polyether after the ethoxylation was completed. EO/PO molar ratio 5.7; OH value 165 mg KOH/g. The end-capping OH groups composition of this polyol was investigated with instrumental analytical techniques and found to be of around 85% secondary / 15% primary
- Polyether B: An ethoxylated polyether polyol based on glycerol as initiator of OH value 538 mg KOH/g.
- Polyether C: A propoxylated polyether polyol based on glycerol as initiator of OH value 538 mg KOH/g.
- Polyether D: A propoxylated polyether polyol based on sorbitol of OH value 510 mg KOH/g
- Polyether E: A propoxylated polyether polyol based on diaminodiphenylmethane as initiator and DEG as co-initiator of OH value 500 mg KOH/g.
- Polyether F: An ethoxylated polyether polyol based on glycerol as initiator of OH value 245 mg KOH/g.
- Polyether G: A propoxylated polyether based on glycerol, partially tipped with Ethylene oxide, with OHv = 165 mg KOH/g. The ethylene oxide tip has been added to the polyether after the propoxylation was completed. The end-capping OH groups composition of this polyol was investigated with instrumental analytical techniques and found to be of around 85% secondary / 15% primary, so the same of polyether A
- Polyester A: A polyester polyol of OH value 510 mg KOH/g
- Polyester B: A polyester polyol of OH value 175 mg KOH/g
- Suprasec® 2085: Polymeric MDI available from Huntsman
- Catalyst LB: potassium acetate catalyst (48 wt% in a carrier)
- Lactic acid: lactic acid (90 % in water)
- TEP: triethylphosphate fire retardant
- Surfactant: Silicone surfactant
- NIAX® K-zero: 3000 potassium octoate catalyst
- Jeffcat® TR 90: 1.3.5-Tris-(3-dimethylaminopropyl-)hexahydro-s-triazine catalyst
- Jeffsol® PC: Propylene carbonate available from Huntsman
- BDMA: benzyl dimethyl amine catalyst

### Examples 1-6 and comparative examples 1-6 and 11

Rigid urethane-modified polyisocyanurate foams were prepared from the ingredients listed below in Table 1 (amounts are indicated in pbw).

The typical reactivity data (cream time (CT), string time (ST), free rise density (FRD), closed cell content (ccc)) were noted.

Free rise density (FRD) refers to density measured on foam samples made under atmospheric conditions (in the presence of blowing agents) according to ISO 845.

Cream time (CT) refers to the time required for the reaction mixture to change from the liquid state to a creamy state and starts to foam (expand) subsequently.

The reaction to fire was measured by the B2 flame spread test according to standard DIN 4102.

Friability was measured according to normative reference ISO C421.

The results are reported in Table 1.

**Table 1**

| | | Ex 1 | Ex 2 | Ex 3 | Ex 4 | Comp 1 | Comp 2 | Comp 3 | Comp 4 | Comp 5 | Comp 6 | Ex 5 | Ex 6 | Comp 11 |
|---|---|---|---|---|---|---|---|---|---|---|---|---|---|---|
| | | | | | | | | | | | | | | |
| Polyether A | pbw | 66.6 | 66.6 | 66.6 | 66.6 | 66.6 | 66.6 | 66.6 | 66.6 | 66.6 | | 66.6 | 66.6 | |
| Novolac 1 | pbw | 13.8 | | | | | | | | | 13.8 | 10.5 | | 13.8 |
| Novolac 2 | pbw | | 13.8 | | | | | | | | | | | |
| Novolac 3 | pbw | | | 13.8 | | | | | | | | | | |
| Novolac 4 | pbw | | | | 13.8 | | | | | | | | | |
| Polyether B | pbw | | | | | 13.8 | | | | | | | | |
| Polyether C | pbw | | | | | | 13.8 | | | | | | | |
| Polyether D | pbw | | | | | | | 13.8 | | | | | | |
| Polyether E | pbw | | | | | | | | 13.8 | | | | | |
| Polyether G | pbw | | | | | | | | | | | | | 66.6 |
| Polyester A | pbw | | | | | | | | | 13.8 | | | | |
| Polyester B | pbw | | | | | | | | | | 66.6 | | | |
| Novolac 5 | pbw | | | | | | | | | | | | 19.7 | |
| TEP | pbw | 9.2 | 9.2 | 9.2 | 9.2 | 9.2 | 9.2 | 9.2 | 9.2 | 9.2 | 9.2 | 12.5 | 3.2 | 9.2 |
| Catalyst LB | pbw | 1.3 | 1.3 | 1.3 | 1.3 | 1.3 | 1.3 | 1.3 | 1.3 | 1.3 | 1.3 | 1.3 | 1.3 | 1.3 |
| Niax Kzero 3000 | pbw | 1.2 | 1.2 | 1.2 | 1.2 | 1.2 | 1.2 | 1.2 | 1.2 | 1.2 | 1.2 | 1.2 | 1.2 | 1.2 |
| Lactic acid | pbw | 1.4 | 1.4 | 1.4 | 1.4 | 1.4 | 1.4 | 1.4 | 1.4 | 1.4 | 1.4 | 1.4 | 1.4 | 1.4 |
| Jeffsol PC | pbw | 3.0 | 3.0 | 3.0 | 3.0 | 3.0 | 3.0 | 3.0 | 3.0 | 3.0 | 3.0 | 3.0 | 3.0 | 3.0 |
| Surfactant | pbw | 3.0 | 3.0 | 3.0 | 3.0 | 3.0 | 3.0 | 3.0 | 3.0 | 3.0 | 3.0 | 3.0 | 3.0 | 3.0 |
| BDMA | pbw | 0.5 | 0.5 | 0.5 | 0.5 | 0.5 | 0.5 | 0.5 | 0.5 | 0.5 | 0.5 | 0.5 | 0.5 | 0.5 |
| Jeffcat TR90 | pbw | 0.5 | 0.5 | 0.5 | 0.6 | 0.1 | 0.5 | 0.5 | 0.3 | 0.2 | 0.8 | 0.5 | 0.3 | 1.4 |
| water | pbw | 1.0 | 1.0 | 1.0 | 1.0 | 1.0 | 1.0 | 1.0 | 1.0 | 1.0 | 1.0 | 1.0 | 1.0 | 1.0 |
| n-pentane | pbw | 12.0 | 12.0 | 12.0 | 12.7 | 10.5 | 11.0 | 11.0 | 11.0 | 9.0 | 12.0 | 12.0 | 11.5 | 12.0 |
| Total | pbw | 113.5 | 113.5 | 113.5 | 114.2 | 111.5 | 112.4 | 112.5 | 112.2 | 110.1 | 113.8 | 113.5 | 112.7 | 113.5 |
| | | | | | | | | | | | | | | |
| OHv-Pol. Blend | mg KOH/g | 250 | 253 | 257 | 256 | 258 | 256 | 253 | 252 | 258 | 256 | 236 | 237 | 250 |
| Required Index | % | 256 | 256 | 256 | 256 | 256 | 256 | 256 | 256 | 256 | 256 | 256 | 256 | 256 |
| | | | | | | | | | | | | | | |
| Suprasec 2085 | pbw | 181 | 183 | 185 | 186 | 183 | 183 | 181 | 180 | 181 | 185 | 170 | 170 | 181 |
| | | | | | | | | | | | | | | |
| CT/ST | sec/sec | 12/97 | 12/98 | 12/96 | 12/99 | 14/97 | 10/96 | 10/100 | 10/99 | 13/99 | 15/100 | 11/89 | 10/88 | 12/97 |
| FRD | kg/m³ | 31.2 | 31.5 | 31.6 | 31.5 | 31.2 | 31.2 | 31.6 | 31.3 | 31.3 | 31.9 | 29.0 | 29.1 | 32.8 |
| B2 | cm | 14.1 | 14.1 | 13.8 | 14.3 | 13.4 | 16.2 | 16.8 | 16.4 | 13.0 | 12.0 | 13.6 | 13.4 | >17 |
| ccc | % | 88.6 | 88.3 | 88.2 | 90.1 | 87.2 | 85.2 | 86.1 | 86.0 | 88.5 | 89.6 | 88.6 | 86.6 | 86.2 |
| friability | % | 13.2 | 16.4 | 16.3 | 16.9 | 26.7 | 26.9 | 26.1 | 26.0 | 26.4 | 22.1 | 14.0 | 19.5 | 30.1 |

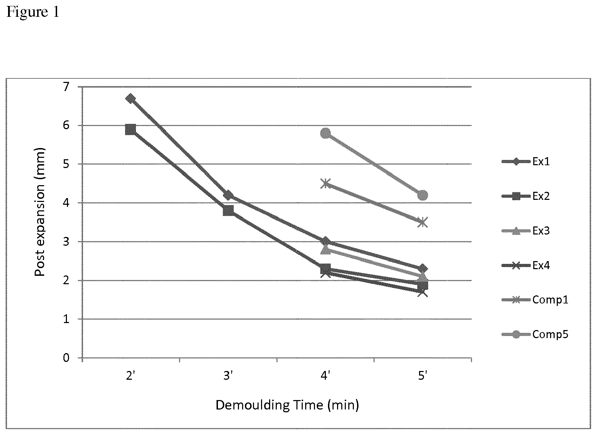

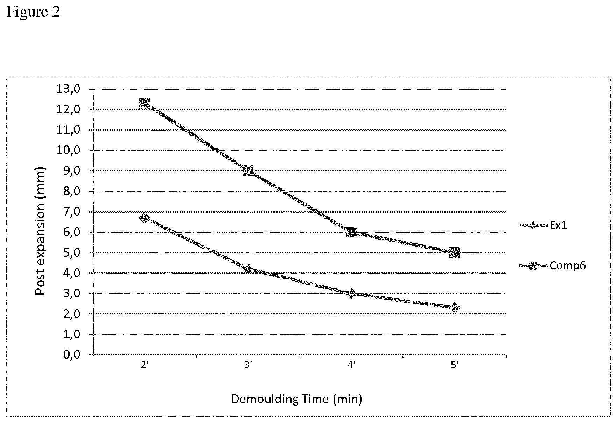

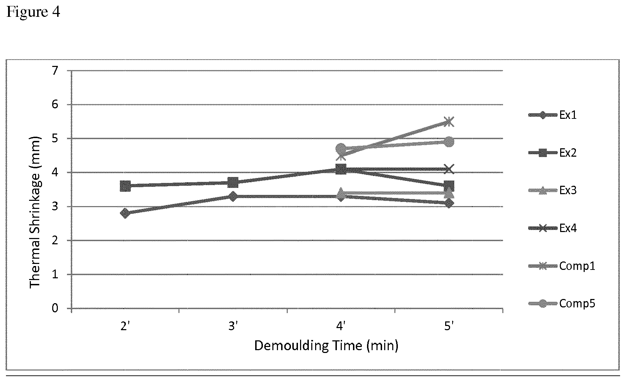

A mould of 40 cm x 40 cm x 10 cm was used to measure post-expansion after demoulding. The mould was left open at one side (40 cm x 10 cm) and tilted under an angle of 6 degrees in order to simulate the conditions of overpack and flow present on an industrial laminator. Metal facings were present at the bottom and top of the mould at a temperature similar to an industrial laminator process. At a given point in time (demould time), the panel was removed from the mould and the maximum post expansion in the central 20 cm x 20 cm area of the panel was measured. After 24 hours, the panel was cut to pieces to examine the occurrence of foam splits. The overall experiment was typically repeated for a number of demould times (e.g. 4 minutes, 5 minutes, etc...). Overall this demould test has proven to correlate well with an industrial laminator process.
The post expansion results are presented in Figure 1 and the shrinkage results in Figure 2. These examples show that the addition of novolac polyol leads to B2 fire rated foam with low exothermicity (examples 1-4) while addition of other types of polyols either do not provide B2 rated foam (comparative example 2-4) or give high exothermicity (comparative example 1, comparative example 5). Also lower friability is obtained when novolac polyols are used. Further better pentane emulsification and foam aspect are obtained. Figure 1 shows that the higher exothermicity of Comparative example 1 and Comparative example 5 leads to a much worse post expansion and also in a higher shrinkage the following day (see figure 4).

The examples in Table 1 show that:
1) The addition of unmodified novolac to the ethoxylated polyol with PO tip leads to B2 fire rated foams (examples 1-4) while the addition of other types of polyols either do not provide B2 rated foam (comparative example 2, comparative example 3 and comparative example 4) or give high friability (comparative example 1 and comparative example 5).
2) Much higher foam friability is obtained if Novolac is added to a polyester rather than to the ethoxylated polyol with PO tip (comparative example 6) although in this case the fire rating is conserved.
3) Higher friability is also obtained if a Novolac polyol is used in combination with the ethoxylated polyol with PO tip instead of unmodified Novolac (Example 6 relative to Example 5), although B2 fire rating remains conserved.
4) When polyether A is replaced by polyether G (Comparative example 11), the resulting foam is not B2 fire rated although the composition of the Primary/Secondary of groups of the two polyols is the same (85/15 secondary/primary OH for polyol A and G), as well as the OHv=165 and the initiator used (glycerol). This shows that the OH terminal group composition is not relevant to achieve the goal of the current invention, differently from what is described in US 2013/059934. Furthermore in Comparative example 11 the friability is much higher compared to the examples according to the invention.

Figures 1,2,3,4,5 and 6 show post expansion and shrinkage figures.
1) Figures 1 and 4 show the higher post expansion and the higher shrinkage (after 1 day) of Comparative example 1 and Comparative example 5 relative to the inventive examples (Example 1, Example 2, Example 3 and Example 4).

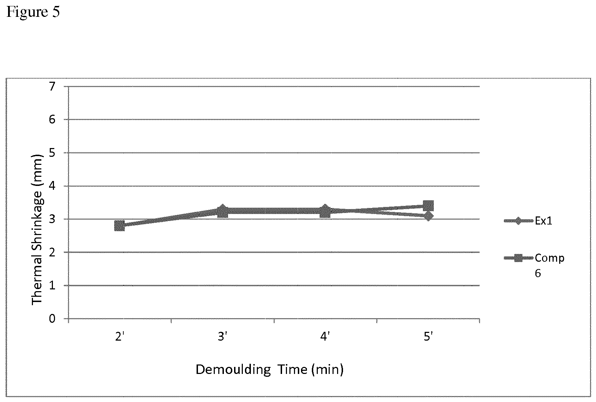

2) Figures 2 and 5 show the much higher post expansion of comparative example 6 relative to Example 1, with comparable shrinkage. This shows that the beneficial effect of Novolac described in US2012/009407 are not sufficient to pursue the target of this invention. This is also confirmed by Comparative example 11 and comparative example 12 formerly discussed.

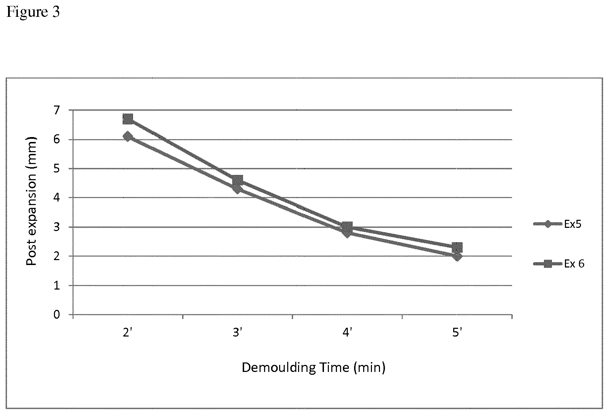

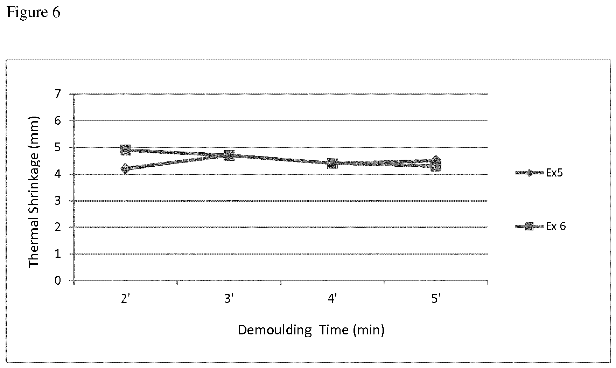

3) Figures 3 and 6 show that post expansion of Example 5 and Example 6 are similar and shrinkage as well. This suggests that both unmodified Novolac and Novolac polyols could be used in combination to the ethoxylated polyol with PO tip to achieve low post expansion, although the disadvantage of the higher friability with the Novolac polyol makes the use of the unmodified Novolac the preferred choice to exploit in full the benefits of the concept.

### Example 7 and comparative examples 7-10 and 12

A series of B2 fire rated rigid PUR foams were prepared from the ingredients listed below in Table 2 (amounts are indicated in pbw).

The typical reactivity data (cream time (CT), string time (ST), free rise density (FRD), closed cell content (ccc)) were noted.

The reaction to fire was measured by the B2 flame spread test according to standard DIN 4102.

Results are reported in Table 2.

**Table 2**

| | | Ex 7 | Comp 7 | Comp 8 | Comp 9 | Comp 10 | Comp 12 |
|---|---|---|---|---|---|---|---|
| | | | | | | | |
| Polyether A | pbw | 20.0 | | | | | |
| Novolac 1 | pbw | 6.0 | | | | 6.0 | 6.0 |
| Glycerol | pbw | 5.5 | 5.5 | 5.5 | 5.5 | 5.5 | 5.5 |
| Polyester C | pbw | | 26.0 | | | | |
| TCPP | pbw | 20.5 | 20.5 | 20.5 | 20.5 | 20.5 | 20.5 |
| Polyether F | pbw | | | 26.0 | | | |
| Novolac 5 | pbw | | | | 26.0 | | |
| Polyether D | pbw | 30.0 | 30.0 | 30.0 | 30.0 | 30.0 | |
| Polyether G | | | | | | | 20 |
| Polyether H | | | | | | | |
| TEP | pbw | 11.6 | 11.6 | 11.6 | 11.6 | 11.6 | 11.6 |
| Polyester B | pbw | | | | | 20.0 | |
| PMDETA | pbw | 0.2 | 0.2 | 0.2 | 0.2 | 0.2 | 0.2 |
| Catalyst LB | pbw | 0.3 | 0.3 | 0.3 | 0.3 | 0.3 | 0.3 |
| Jeffcat TR 52 | pbw | 0.5 | 0.5 | 0.5 | 0.5 | 0.5 | 0.5 |
| Surfactant | pbw | 2.8 | 2.8 | 2.8 | 2.8 | 2.8 | 2.8 |
| DMCHA | pbw | 0.25 | 0.10 | 0.15 | 0.20 | 0.20 | 0.25 |
| water | pbw | 2.5 | 2.5 | 2.5 | 2.5 | 2.5 | 2.5 |
| n-pentane | pbw | 4.7 | 4.0 | 4.0 | 5.0 | 5.3 | 4.7 |
| Total | pbw | 104.80 | 103.95 | 104.00 | 105.05 | 105.35 | 104.80 |
| | | | | | | | |
| OHv-Pol. Blend | mg KOH/g | 460 | 464 | 464 | 465 | 460 | 460 |
| Required Index | % | 130 | 130 | 130 | 130 | 130 | 130 |
| | | | | | | | |
| Suprasec 2085 | pbw | 156 | 156 | 156 | 158 | 156 | 156 |
| | | | | | | | |
| CT/ST | sec/sec | 14/78 | 15/79 | 16/78 | 17/78 | 15/77 | 15/80 |
| FRD | kg/m³ | 33.5 | 33.7 | 33.3 | 34.0 | 33.3 | 34.0 |
| B2 | cm | 14.0 | 12.1 | 13.0 | 14.4 | 14.5 | >19 |
| ccc | % | 88.7 | 90.1 | 86.0 | 89.7 | 85.4 | 88.1 |

In the case of PUR formulations, a given combination of unmodified Novolac and an EO polyol with PO tip having 77% EO and 23% PO and an OHv=240 (see Example 7 according to the invention) was systematically replaced by other polyols with similar OHv, all expected to provide fire rated B2 foams (see Comparative examples 7,8,9,10) and to be compared in terms of demolding performance.

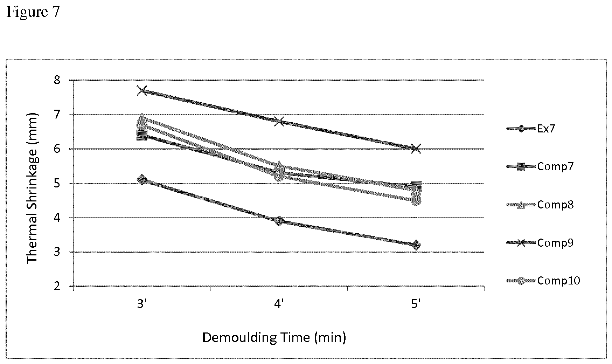

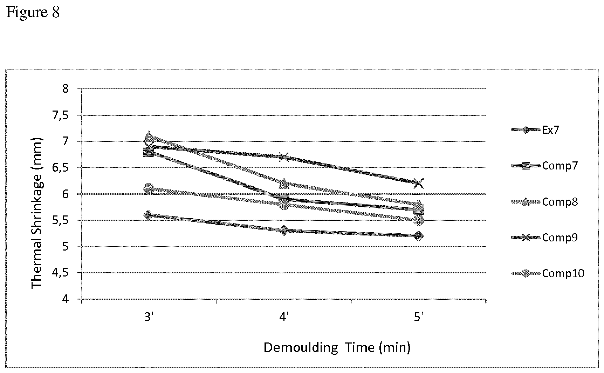

Figures 7 and 8 show post expansion and shrinkage figures.

The combination of unmodified Novolac and the ethoxylated polyol with PO tip shows lower post expansion and lower shrinkage compared to the use of other polyols having the same OHv level, such as a polyester, an ethoxylated polyether and even Novolac initiated polyol.

In particular Comparative example 9, relative to Example 7 according to the invention, shows that in the case of PUR the choice of unmodified Novolac over the Novolac polyol is preferred if compared to the examples described in table 1(PIR formulations).

Furthermore, in the case of Comparative example 8, splits were observed in the foam core of panels.

Finally comparative example 12 confirms that also in the case of PUR formulations, when the polyether A is replaced by polyether G, the resulting foam is not anymore B2 fire rated although the composition of the Primary/Secondary of groups of the two polyols is the same (85/15 secondary/primary OH for polyol A and G) or similar (nearly 100% secondary OH for polyol H), as well as the OHv=165 and the initiator used (glycerol). Therefore the OH terminal group composition is not relevant to pursue the target of this invention, differently from what described in US 2013/059934. Furthermore Comparative example 12 confirms that the beneficial effect of Novolac described in US2012/009407 is not sufficient to pursue the target of this invention, if not combined with the EO polyol with PO tip (inventive Example 7).

## Claims

1. Process for preparing rigid polyurethane or urethane-modified polyisocyanurate foams from polyisocyanates and polyfunctional isocyanate-reactive compounds in the presence of blowing agents wherein the polyfunctional isocyanate-reactive compounds comprise a polyether polyol having a hydroxyl number of between 50 and 650 mg KOH/g obtained by reacting a polyfunctional initiator first with ethylene oxide and subsequently with propylene oxide such that the propoxylation degree of said polyether polyol is between 0.33 and 2 mole propylene oxide per active hydrogen atom in the initiator and the molar ratio of ethylene oxide to propylene oxide in said polyether polyol is at least 2 **characterised in that** the polyfunctional isocyanate-reactive compounds further comprise an unmodified or modified novolac polyol.

2. Process according to claim 1 wherein the unmodified novolac polyol has a general chemical structure as follows: 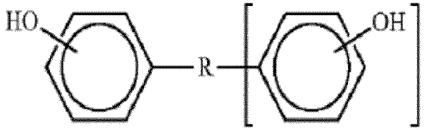 wherein R is an alkylene group and the novolac polyol has an average hydroxyl functionality of from 2 to 30 calculated by dividing the weight average molecular weight of the novolac polyol by the equivalent weight of the novolac polyol.

3. Process according to claim 1 or 2 wherein the novolac polyol is the reaction product of a phenolic compound and an aldehyde.

4. Process according to claim 3 wherein the phenolic compound is selected from the group consisting of phenol, o-cresol, m-cresol, p-cresol, bisphenol A, bisphenol F, bisphenol S, alkylphenols like p-tert. butylphenol, p-tert. amylphenol, p-isopropylphenol, p-tert. octylphenol, nonylphenol, dodecylphenol, p-cumylphenol, xylenols (dimethylphenols), ethylphenols, p-phenylphenol, alpha and beta naphthols, resorcinol, methylresorcinols, cashew nut shell liquid (CNSL) such as C15 alkylphenol, halogenated phenols like p-chlorophenol, o-bromophenol, or combination of two or more thereof and wherein the aldehyde is selected from the group consisting of formaldehyde, acetaldehyde, propionaldehyde, butyraldehyde, benzaldehyde, furfuryl aldehyde, glyoxal, or combinations of two or more thereof.

5. Process according to any one of the preceding claims wherein the modified novolac polyol is obtained by alkylating the phenolic hydroxyl groups of an unmodified novolac polyol with an alkylene oxide or alkylene carbonate.

6. Process according to any one of the preceding claims wherein the unmodified or modified novolac polyol is present in an amount of from 1 to 65 parts by weight per 100 pbw of polyfunctional isocyanate-reactive compounds, preferably in an amount of from 3 to 40 parts by weight per 100 pbw of polyfunctional isocyanate-reactive compounds, most preferably in an amount of 5 to 20 parts by weight per 100 pbw of polyfunctional isocyanate-reactive compounds.

7. Process according to any one of the preceding claims wherein the propoxylation degree of the polyether polyol is between 0.66 and 1 mole of propylene oxide per active hydrogen atom in the initiator.

8. Process according to any one of the preceding claims wherein the molar ratio of ethylene oxide to propylene oxide in said polyether polyol is between 2 and 10, preferably between 2.5 and 8.5.

9. Process according to any one of the preceding claims wherein the hydroxyl number of said polyether polyol is between 50 and 400, preferably between 75 and 350 and most preferably between 100 and 300 mg KOH/g.

10. Process according to any one of the preceding claims wherein the polyfunctional initiator used to obtain said polyether polyol is selected from glycerol, diaminodiphenylmethane and polymethylene polyphenylene polyamines.

11. Process according to any one of the preceding claims wherein said polyether polyol is present in amounts ranging from 5 to 80 pbw of total polyfunctional isocyanate-reactive compounds.

12. Process according to any one of the preceding claims wherein the blowing agent is selected from the group consisting of hydrocarbons, hydrofluorocarbons, hydrochlorofluoroolefins, hydrofluoroolefins and any mixture thereof.

13. Process according to any one of the preceding claims wherein the reaction is carried out at an isocyanate index of up to to 180 %, more preferably from 100 to 160 % in order to prepare rigid polyurethane foam.

14. Process according to any one of claims 1 to 12 wherein the reaction is carried out at an isocyanate index of from 180 to 1000 %, preferably from 200 to 500%, most preferably from 350 to 500% in order to prepare rigid urethane-modified polyisocyanurate foam.

15. Rigid polyurethane or urethane-modified polyisocyanurate foam obtainable by the process as defined in any one of the preceding claims.

16. Foam as defined in claim 15 wherein said foam is a layer in a sandwich panel.

17. Polyfunctional isocyanate-reactive composition containing an unmodified or modified novolac polyol as defined in any one of claims 1 to 6 and a polyether polyol as defined in any one of claims 7 to 11 and further auxiliaries.

18. Reaction system for preparing rigid polyurethane or urethane-modified polyisocyanurate foam comprising a) an organic polyisocyanate, b) a polyfunctional isocyanate-reactive component, c) a blowing agent and optionally d) further auxiliaries **characterized in that** the polyfunctional isocyanate-reactive component comprises an unmodified or modified novolac polyol as defined in any one of claims 1 to 6 and a polyether polyol as defined in any one of claims 7 to 11.

## Patentansprüche

1. Verfahren zur Herstellung von Polyurethan- oder Urethan-modifizierten Polyisocyanurat-Hartschäumen aus Polyisocyanaten und polyfunktionellen Isocyanat-reaktiven Verbindungen in Anwesenheit von Treibmitteln, wobei die polyfunktionellen Isocyanat-reaktiven Verbindungen ein Polyetherpolyol mit einer Hydroxylzahl zwischen 50 und 650 mg KOH/g umfassen, erhalten durch Umsetzen eines polyfunktionellen Initiators zuerst mit Ethylenoxid und anschließend mit Propylenoxid, so dass der Propoxylierungsgrad des Polyetherpolyols zwischen 0,33 und 2 mol Propylenoxid pro aktivem Wasserstoffatom im Initiator ist und das Molverhältnis von Ethylenoxid zu Propylenoxid in dem Polyetherpolyol mindestens 2 ist, **dadurch gekennzeichnet, dass** die polyfunktionellen Isocyanat-reaktiven Verbindungen ferner ein unmodifiziertes oder modifiziertes Novolakpolyol umfassen.

2. Verfahren nach Anspruch 1, wobei das unmodifizierte Novolakpolyol eine allgemeine chemische Struktur wie folgt aufweist: 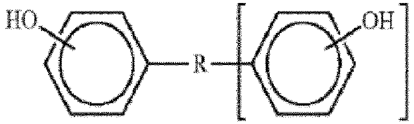 worin R eine Alkylengruppe ist und das Novolakpolyol eine durchschnittliche Hydroxylfunktionalität von 2 bis 30 aufweist, berechnet durch Teilen des Gewichtsmittel des Molekulargewichts des Novolakpolyols durch das Äquivalentgewicht des Novolakpolyols.

3. Verfahren nach Anspruch 1 oder 2, wobei das Novolakpolyol das Reaktionsprodukt einer Phenolverbindung und eines Aldehyds ist.

4. Verfahren nach Anspruch 3, wobei die Phenolverbindung ausgewählt ist aus der Gruppe bestehend aus Phenol, o-Kresol, m-Kresol, p-Kresol, Bisphenol A, Bisphenol F, Bisphenol S, Alkylphenolen, wie z.B. p-tert.-Butylphenol, p-tert.-Amylphenol, p-Isopropylphenol, p-tert.-Octylphenol, Nonylphenol, Dodecylphenol, p-Cumylphenol, Xylenolen (Dimethylphenolen), Ethylphenolen, p-Phenylphenol, alpha- und beta-Naphtholen, Resorcin, Methylresorcinolen, Cashewnussschalenflüssigkeit (CNSL), wie z.B. C15-Alkylphenol, halogenierten Phenolen, wie z.B. p-Chlorphenol, o-Bromphenol, oder einer Kombination von zwei oder mehr davon und wobei das Aldehyd ausgewählt ist aus der Gruppe bestehend aus Formaldehyd, Acetaldehyd, Propionaldehyd, Butyraldehyd, Benzaldehyd, Furfurylaldehyd, Glyoxal oder Kombinationen von zwei oder mehr davon.

5. Verfahren nach irgendeinem der vorhergehenden Ansprüche, wobei das modifizierte Novolakpolyol durch Alkylieren der phenolischen Hydroxylgruppen eines nicht modifizierten Novolakpolyols mit einem Alkylenoxid oder Alkylencarbonat erhalten wird.

6. Verfahren nach irgendeinem der vorhergehenden Ansprüche, wobei das unmodifizierte oder modifizierte Novolakpolyol in einer Menge von 1 bis 65 Gewichtsteilen pro 100 Gewichtsteilen polyfunktioneller Isocyanat-reaktiver Verbindungen vorliegt, bevorzugt in einer Menge von 3 bis 40 Gewichtsteilen pro 100 Gewichtsteilen polyfunktioneller Isocyanat-reaktiver Verbindungen, am meisten bevorzugt in einer Menge von 5 bis 20 Gewichtsteilen pro 100 Gewichtsteilen polyfunktioneller Isocyanat-reaktiver Verbindungen.

7. Verfahren nach irgendeinem der vorhergehenden Ansprüche, wobei der Propoxylierungsgrad des Polyetherpolyols zwischen 0,66 und 1 mol Propylenoxid pro aktivem Wasserstoffatom im Initiator liegt.

8. Verfahren nach irgendeinem der vorhergehenden Ansprüche, wobei das Molverhältnis von Ethylenoxid zu Propylenoxid in dem Polyetherpolyol zwischen 2 und 10, vorzugsweise zwischen 2,5 und 8,5, liegt.

9. Verfahren nach irgendeinem der vorhergehenden Ansprüche, wobei die Hydroxylzahl des Polyetherpolyols zwischen 50 und 400, bevorzugt zwischen 75 und 350 und am bevorzugtesten zwischen 100 und 300 mg KOH/g liegt.

10. Verfahren nach irgendeinem der vorhergehenden Ansprüche, wobei der polyfunktionelle Initiator, der verwendet wird, um das Polyetherpolyol zu erhalten, ausgewählt ist aus Glycerin, Diaminodiphenylmethan und Polymethylenpolyphenylenpolya minen.

11. Verfahren nach irgendeinem der vorhergehenden Ansprüche, wobei das Polyetherpolyol in Mengen im Bereich von 5 bis 80 Gewichtsteilen der gesamten polyfunktionellen Isocyanat-reaktiven Verbindungen vorliegt.

12. Verfahren nach irgendeinem der vorhergehenden Ansprüche, wobei das Treibmittel ausgewählt ist aus der Gruppe bestehend aus Kohlenwasserstoffen, Fluorkohlenwasserstoffen, Hydrofluorchlorolefinen, Hydrofluorolefinen und einer beliebigen Mischung davon.

13. Verfahren nach irgendeinem der vorhergehenden Ansprüche, wobei die Reaktion bei einem Isocyanatindex von bis zu 180%, bevorzugter von 100 bis 160% durchgeführt wird, um Polyurethan-Hartschaum herzustellen.

14. Verfahren nach irgendeinem der Ansprüche 1 bis 12, wobei die Reaktion bei einem Isocyanatindex von 180 bis 1000%, bevorzugt von 200 bis 500%, am meisten bevorzugt 350 bis 500% durchgeführt wird, um Urethan-modifizierten Polyisocyanurat-Hartschaum herzustellen.

15. Polyurethan- oder Urethan-modifizierter Polyisocyanurat-Hartschaum, erhältlich durch das Verfahren, wie in irgendeinem der vorhergehenden Ansprüche definiert.

16. Schaum wie in Anspruch 15 definiert, wobei der Schaum eine Schicht in einer Sandwichplatte ist.

17. Polyfunktionelle Isocyanat-reaktive Zusammensetzung, die ein unmodifiziertes oder modifiziertes Novolakpolyol, wie in irgendeinem der Ansprüche 1 bis 6 definiert, und ein Polyetherpolyol, wie in irgendeinem der Ansprüche 7 bis 11 definiert, und weitere Hilfsstoffe enthält.

18. Reaktionssystem zur Herstellung von Polyurethan- oder Urethanmodifiziertem Polyisocyanurat-Hartschaum, umfassend a) ein organisches Polyisocyanat, b) eine polyfunktionelle Isocyanat-reaktive Komponente, c) ein Treibmittel und gegebenenfalls d) weitere Hilfsstoffe, **dadurch gekennzeichnet, dass** die polyfunktionelle Isocyanat-reaktive Komponente ein unmodifiziertes oder modifiziertes Novolakpolyol, wie in irgendeinem der Ansprüche 1 bis 6 definiert, und ein Polyetherpolyol, wie in irgendeinem der Ansprüche 7 bis 11 definiert, umfasst.

## Revendications

1. Procédé de préparation de mousses rigides de polyisocyanurate modifié par un polyuréthane ou un uréthane à partir de polyisocyanates et de composés réactifs avec un isocyanate polyfonctionnel en présence d'agents gonflants où les composés réactifs avec un isocyanate polyfonctionnel comprennent un polyétherpolyol ayant un indice d'hydroxyle compris entre 50 et 650 mg KOH/g obtenu en faisant réagir un initiateur polyfonctionnel d'abord avec de l'oxyde d'éthylène et ensuite avec de l'oxyde de propylène de telle sorte que le degré de propoxylation dudit polyétherpolyol est compris entre 0,33 et 2 moles d'oxyde de propylène par atome d'hydrogène actif dans l'initiateur et le rapport molaire de l'oxyde d'éthylène sur l'oxyde de propylène dans ledit polyétherpolyol est d'au moins 2 **caractérisé en ce que** les composés réactifs avec un isocyanate polyfonctionnel comprennent en outre un polyol novolaque non modifié ou modifié.

2. Procédé selon la revendication 1, dans lequel le polyol novolaque non modifié a une structure chimique générale comme suit : 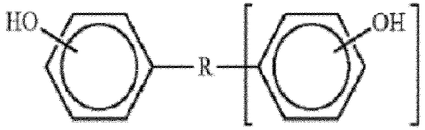 dans laquelle R est un groupe alkylène et le polyol novolaque a une fonctionnalité hydroxyle moyenne de 2 à 30 calculée en divisant le poids moléculaire moyen en poids du polyol novolaque par le poids équivalent du polyol novolaque.

3. Procédé selon la revendication 1 ou 2, dans lequel le polyol novolaque est le produit de réaction d'un composé phénolique et d'un aldéhyde.

4. Procédé selon la revendication 3, dans lequel le composé phénolique est choisi dans le groupe constitué par le phénol, l'o-crésol, le m-crésol, le p-crésol, le bisphénol A, le bisphénol F, le bisphénol S, les alkylphénols tels que le p-tert-butylphénol, le p-tert-amylphénol, le p-isopropylphénol, le p-tert-octylphénol, le nonylphénol, le dodécylphénol, le p-cumylphénol, les xylénols (diméthylphénols), les éthylphénols, le p-phényl-phénol, les alpha et bêta-naphtols, le résorcinol, les méthylrésorcinols, un liquide de coque de noix de cajou (CNSL) tel qu'un alkylphénol en C15, les phénols halogénés tels que le p-chlorophénol, l'o-bromophénol, ou une combinaison de deux ou plus de deux de ceux-ci et dans lequel l'aldéhyde est choisi dans le groupe constitué par le formaldéhyde, l'acétaldéhyde, le propionaldéhyde, le butyraldéhyde, le benzaldéhyde, le furfurylaldéhyde, le glyoxal, ou des combinaisons de deux ou plus de deux de ceux-ci.

5. Procédé selon l'une quelconque des revendications précédentes, dans lequel le polyol novolaque modifié est obtenu par alkylation des groupes hydroxyle phénoliques d'un polyol novolaque non modifié avec un oxyde d'alkylène ou un carbonate d'alkylène.

6. Procédé selon l'une quelconque des revendications précédentes, dans lequel le polyol novolaque non modifié ou modifié est présent en une quantité de 1 à 65 parties en poids pour 100 parties en poids de composés réactifs avec un isocyanate polyfonctionnel, de préférence en une quantité de 3 à 40 parties par poids pour 100 parties en poids de composés réactifs avec un isocyanate polyfonctionnel, de manière préférée entre toutes en une quantité de 5 à 20 parties en poids pour 100 parties en poids de composés réactifs avec un isocyanate polyfonctionnel.

7. Procédé selon l'une quelconque des revendications précédentes, dans lequel le degré de propoxylation du polyétherpolyol est compris entre 0,66 et 1 mole d'oxyde de propylène par atome d'hydrogène actif dans l'initiateur.

8. Procédé selon l'une quelconque des revendications précédentes, dans lequel le rapport molaire de l'oxyde d'éthylène sur l'oxyde de propylène dans ledit polyétherpolyol est compris entre 2 et 10, de préférence entre 2,5 et 8,5.

9. Procédé selon l'une quelconque des revendications précédentes, dans lequel l'indice d'hydroxyle dudit polyétherpolyol est compris entre 50 et 400, de préférence entre 75 et 350 et de manière préférée entre toutes entre 100 et 300 mg KOH/g.

10. Procédé selon l'une quelconque des revendications précédentes, dans lequel l'initiateur polyfonctionnel utilisé pour obtenir ledit polyétherpolyol est choisi parmi le glycérol, le diaminodiphénylméthane et les poly-méthylène-polyphénylène-polyamines.

11. Procédé selon l'une quelconque des revendications précédentes, dans lequel ledit polyétherpolyol est présent en des quantités comprises dans la plage allant de 5 à 80 parties en poids de composés réactifs avec un isocyanate polyfonctionnel totaux.

12. Procédé selon l'une quelconque des revendications précédentes, dans lequel l'agent gonflant est choisi dans le groupe constitué par les hydrocarbures, les hydro-fluorocarbures, les hydrochlorofluorooléfines, les hydro-fluorooléfines et un quelconque mélange de ceux-ci.

13. Procédé selon l'une quelconque des revendications précédentes, dans lequel la réaction est mise en œuvre à un indice d'isocyanate allant jusqu'à 180 %, plus préférablement de 100 à 160 % afin de préparer une mousse rigide de polyuréthane.

14. Procédé selon l'une quelconque des revendications 1 à 12, dans lequel la réaction est mise en œuvre à un indice d'isocyanate de 180 à 1000 %, de préférence de 200 à 500 %, de manière préférée entre toutes de 350 à 500 % afin de préparer une mousse rigide de polyisocyanurate modifié par un uréthane.

15. Mousse rigide de polyisocyanurate modifié par un polyuréthane ou un uréthane pouvant être obtenue par le procédé tel que défini dans l'une quelconque des revendications précédentes.

16. Mousse telle que définie dans la revendication 15, dans laquelle ladite mousse est une couche dans un panneau sandwich.

17. Composition réactive avec un isocyanate polyfonctionnel contenant un polyol novolaque non modifié ou modifié tel que défini dans l'une quelconque des revendications 1 à 6 et un polyétherpolyol tel que défini dans l'une quelconque des revendications 7 à 11 et d'autres auxiliaires.

18. Système réactionnel pour la préparation d'une mousse rigide de polyisocyanurate modifié par un polyuréthane ou un uréthane comprenant a) un polyisocyanate organique, b) un composant réactif avec un isocyanate polyfonctionnel, c) un agent gonflant et éventuellement d) d'autres auxiliaires **caractérisé en ce que** le composant réactif avec un isocyanate polyfonctionnel comprend un polyol novolaque non modifié ou modifié tel que défini dans l'une quelconque des revendications 1 à 6 et un polyétherpolyol tel que défini dans l'une quelconque des revendications 7 à 11.
